# EUROPÄISCHE PATENTSCHRIFT

(11) **EP 0 389 507 B1**
(45) Veröffentlichungstag und Bekanntmachung des Hinweises auf die Patenterteilung: **29.12.1993**
(21) Anmeldenummer: 88909324.1
(22) Anmeldetag: 29.10.1988
(51) Int. Cl.: B29C 45/13, B29C 45/26

(54) **VORRICHTUNG ZUM HERSTELLEN VON KUNSTSTOFF-FORMTEILEN UND VERWENDUNG DER VORRICHTUNG**
DEVICE FOR MANUFACTURING PLASTIC MOULDINGS AND USE OF THE DEVICE
DISPOSITIF DE FABRICATION DE PIECES MOULEES EN PLASTIQUE ET UTILISATION DU DISPOSITIF

(30) Priorität: 19.11.1987 DE 3739122
(43) Veröffentlichungstag der Anmeldung: 03.10.1990
(73) Patentinhaber: PEBRA GmbH Paul Braun, 73704 Esslingen (DE)
(72) Erfinder: FRITSCH, Walter, D-7305 Altbach (DE); HÜTTNER, Manfred, D-7311 Notzingen (DE)
(74) Vertreter: Wolf, Eckhard, Dr.-Ing.
(86) Internationale Anmeldenummer: EP8800982
(87) Internationale Veröffentlichungsnummer: WO8904751

(56) Entgegenhaltungen:
- EP-A- 0 261 760
- DE-A- 3 446 020
- DE-A- 3 503 036
- FR-A- 2 601 618
- US-A- 3 957 278
- US-A- 4 004 868
- US-A- 4 275 030
- US-A- 4 335 068
- US-A- 4 385 025
- US-A- 4 682 943
- Patent Abstracts of Japan, Band 8, Nr. 16, M270, Zusammenfassung von JP 58-177333, publ 1983-10-18 ASAHI GLAGG K.K.

## Beschreibung

Die Erfindung betrifft eine Vorrichtung zur Herstellung von Kunststoff-Formteilen, in welcher mindestens zwei Reaktionskomponenten in flüssigem Zustand mischbar, in ein zusammenhängendes Formnest eines Formwerkzeugs einspritzbar und dort unter Bildung eines Formteils durch chemische Reaktion aushärtbar sind, wobei das Formnest über mindestens zwei Angußstellen mit verschiedenen Reaktionsgemischen beaufschlagbar und an mindestens einer Trennstelle zeitweilig in gegeneinander abgedichtete, mit je einer der Angußstellen verbundene Bereiche unterteilt ist und wobei in dem Formwerkzeug ein im Bereich der Trennstelle relativ zum Formnest verschiebbarer Trennschieber angeordnet ist.

Bei dem sogenannten Reaktions-Injektions-Verfahren werden zwei im Ausgangszustand noch flüssige Reaktionskomponenten, wie Polyetherpolyol und Polyisocyanat, mittels Dosierpumpen zu einem Mischkopf gefördert und zu einem Reaktionsgemisch vereinigt. Vom Mischkopf strömt das Reaktionsgemisch über eine Angußstelle in das Formwerkzeug und reagiert dort im Formnest zu einem festen Werkstoff, zum Beispiel Polyurethan, aus.

Es ist bekannt (JP-A-58 177 333), Verbundteile aus verschiedenen Kunststoffen dadurch herzustellen, daß von verschiedenen Angußpunkten aus zwei unterschiedliche Reaktionsgemische in zeitlichem Versatz in das Formnest eines Formwerkzeugs eingeschossen werden. Zu diesem Zweck ist in dem Formwerkzeug ein im Bereich der Trennstelle relativ zum Formnest verschiebbarer Trennschieber angeordnet. Der Trennschieber ist dort als starres plattenförmiges Teil ausgebildet, das parallel zur Öffnungsrichtung des Formwerkzeugs verschiebbar ist.

Weiter ist es bei einer Vorrichtung zur Herstellung von thermoplastischen Formteilen im Spritzgußverfahren an sich bekannt (US-A-4 385 025), das Formnest über mindestens zwei Angußstellen nacheinander mit thermoplastischem Material zu beaufschlagen und an einer Trennstelle zeitweilig in gegeneinander abgedichtete, mit je einer Angußstelle verbundene Bereiche zu unterteilen, wobei in dem Formwerkzeug ein im Bereich der Trennstelle relativ zum Formnest verschiebbarer Trennschieber angeordnet ist, der eine über die Trennstelle nach beiden benachbarten Formnestbereichen beidseitig überstehende, und an den überstehenden Teilen sowohl im Sperrzustand als auch im Öffnungszustand eine Begrenzungsfläche des Formnests in den benachbarten Formnestbereichen bildende Sperrfläche aufweist. Der Trennschieber ist dort als starrer Körper ausgebildet, der parallel zur Öffnungsrichtung des Formnests verschiebbar ist.

Ausgehend hiervon liegt der Erfindung die Aufgabe zugrunde, die bekannte Vorrichtung der eingangs angegebenen Art dahingehend zu verbessern, daß Kunststoff-Kunststoff-Verbundteile aus Reaktionsgemischen besonders einfach und kostengünstig in einem Arbeitsgang hergestellt werden können.

Zur Lösung dieser Aufgabe werden die in den Patentansprüchen 1 bzw. 4 angegebenen Merkmalskombinationen vorgeschlagen, weitere vorteilhafte Ausgestaltungen und Weiterbildungen der Erfindung ergeben sich aus den Unteransprüchen.

Die erfindungsgemäße Lösung geht von der an sich bekannten Erkenntnis aus, daß Verbundteile aus verschiedenen Kunststoffen dadurch hergestellt werden können, daß von verschiedenen Angußpunkten aus mindestens zwei unterschiedliche Reaktionsgemische gleichzeitig oder in zeitlichem Versatz in das Formnest eines Formwerkzeugs eingeschossen werden, daß das Formnest während der Schußzeit zumindest eines der Reaktionsgemische in zwei oder mehrere gegeneinander abgedichtete Bereiche getrennt wird und daß im Anschluß an die Schußzeit des einen Reaktionsgemisches die Trennung der Formnestbereiche aufgehoben und die zumindest teilweise noch flüssigen Reaktionsgemische an der Trennstelle zusammengeführt werden.

Um dies optimal zu erreichen, werden erfindungsgemäß folgende Vorrichtungsvarianten vorgeschlagen:
a) Der Trennschieber weist eine über die Trennstelle nach den beiden benachbarten Formnestbereichen beidseitig überstehende und an den überstehenden Teilen sowohl im Sperrzustand als auch im Öffnungszustand eine Begrenzungsfläche des Formnests in den benachbarten Formnestbereichen bildende Sperrfläche auf und ist dabei quer zur Öffnungsrichtung des Formwerkzeugs verschiebbar.
b) Die Trennvorrichtung ist als eine unter der Einwirkung eines Druckmediums verschiebbare flexible Trenndichtung ausgebildet, die eine über die Trennstelle an den beiden benachbarten Formnestbereichen beidseitig überstehende und an den überstehenden Teilen sowohl im Sperrzustand als auch im Öffnungszustand eine Begrenzungsfläche des Formnests in den benachbarten Formnestbereichen bildende Sperrfläche aufweist. In diesem Falle ist die Trenndichtung zweckmäßig senkrecht zum Formnest verschiebbar.

Vorteilhafterweise ist die flexible Trenndichtung als in einer langgestreckten randoffenen Aussparung angeordneter, mit einem Druckmedium (Druckluft oder Hydraulikflüssigkeit) beaufschlagbarer gummielastischer Schlauch ausgebildet, der an seiner der Randöffnung gegenüberliegenden Seite der Aussparung am Formwerkzeug befestigt ist und mit seiner öffnungsseitigen Stirnfläche gegen eine am gegenüberliegenden Werkzeugteil angeordnete Trennkante unter Trennung zweier Formnestbereiche anpreßbar und von dieser unter Freigabe eines Durchtrittsspalts abhebbar ist. Die Weite des Durchtrittsspalts und damit die Wandstärke des Formteils im Übergangsbereich kann durch die Wahl des Schlauchinnendrucks eingestellt werden. Der Dichtungsschlauch ist in der Aussparung zweckmäßig faltenbalgartig ausdehnbar und komprimierbar.

Die Trenndichtung hat gegenüber einem quer zum Formnest verschiebbaren Trennschieber den Vorteil, daß sie auch formumlaufend, also nicht nur in ebenen Trennflächen eingesetzt werden kann, da sie auch in gegeneinander abgewinkelten und gekrümmten Bereichen bei einer Änderung des Innendruckes einen überall gleichen Verschiebeweg ausführt. Hinzu kommt, daß in dem Werkzeug keine zusätzlichen beweglichen Teile erforderlich sind, die getrennt geführt und temperiert werden müssen, wie dies bei einem Trennschieber der Fall ist.

Wenn dagegen in einem abgebogenen Bereich eines Formwerkzeugs Innenschieber erforderlich sind, sind Trennschieber und Trenndichtungen mit quer zum Formnest verlaufendem Verschiebeweg für die zeitweilige Trennung der Formnestbereiche nicht geeignet. Vorteilhafterweise können hierfür jedoch die erfindungsgemäßen Trennschieber eingesetzt werden, die quer zur Öffnungsrichtung des Formwerkzeugs verschiebbar sind.

Ein solcher Trennschieber weist vorteilhafterweise eine gegen eine in Öffnungrichtung des Formwerkzeugs ausgerichtete Trennkante des gegenüberliegenden Werkzeugteils dichtend anpreßbare Dichtungskante auf. Im Anschluß an die Dichtungskante weist der Trennschieber auf der einen Kantenseite eine im wesentlichen senkrecht zur Verschieberichtung des Trennschiebers ausgerichtete, einen Überlappungsbereich zwischen den Reaktiongsgemischen in zwei Endstellungen berandende Begrenzungswand für das Formnest auf, während er auf der anderen Kantenseite eine in der Offenstellung des Trennschiebers die Innenkontur des Formteils bildende Formnest-Begrenzungswand aufweist.

Gemäß einer weiteren vorteilhaften Ausgestaltung der Erfindung sind zwei im Abstand voneinander angeordnete, mit unterschiedlichen Reaktiongsgemischen beaufschlagbare Formnestbereiche vorgesehen, die auf ihren einander zugewandten Seiten durch im Abstand voneinander angeordnete Trennkanten von einem dritten, mit einem weiteren Reaktionsgemisch beaufschlagbaren Formnestbereich abgeteilt sind. Gegen die Trennkanten können entweder ein gemeinsamer, den dritten Formnestbereich begrenzender Trennschieber oder zwei voneinander unabhängige Trennschieber oder Trenndichtungen angepreßt werden.

Zur Erzielung dekorativer Oberflächen kann in einen der Formnestbereiche ein Folien- oder Stoffzuschnitt eingelegt und von dem Reaktionsgemisch hinterschäumt werden. Der Folien- oder der Stoffzuschnitt kann dabei an der Trennkante zwischen zwei Formbereichen durch den Trennschieber oder die Trenndichtung zeitweilig eingespannt werden, wobei der Rand des Zuschnitts über die Trennkante hinweg in den benachbarten Formnestbereich überstehen und dort von dem betreffenden Reaktionsgemisch umschäumt werden kann. Auf diese Weise werden bevorzugt Verkleidungsteile, beispielsweise für Türinnenverkleidungen von Kraftfahrzeugen hergestellt, die in mehrfarbige oder unterschiedlich weiche Bereiche unterteilt werden müssen, die ihrerseits gegebenenfalls mit einer Folie oder einer Textiloberfläche zu kaschieren sind.

Zur Einstellung einer optimalen Verbindung zwischen den Verbundteilen hat sich eine Zeitfolgesteuerung als vorteilhaft erwiesen, mit der nach Maßgabe der unterschiedlichen Schuß-, Start- und Aushärtzeiten der Reaktionsgemische zeitversetzt die verschiedenen Angußstellen mit den Reaktiongsgemischen beaufschlagt und der Trennschieber bzw. die Trenndichtung angesteuert wird.

Die erfindungsgemäße
Vorrichtung kann vorteilhafterweise zur Herstellung von Stoßfängern für Kraftfahrzeuge aus einem Hart-PUR im Verbund mit einer bodennahen Luftabreißlippe aus Weich-PUR verwendet werden, wobei die weiche Lippe etwaigen Hindernissen, wie beispielsweise einem Bordstein, elastisch und daher zerstörungsfrei auszuweichen vermag.

Eine weitere Verwendungsmöglichkeit besteht in der Herstellung von Lufteintrittsgittern, Verkleidungsteilen und Karosserieteilen für Kraftfahrzeuge aus Hartkunststoff, die in ihrem Randbereich durch eine weiche Verbundlippe begrenzt sind. Eine solche Lippe gewährleistet einmal einen Toleranzausgleich gegenüber den angrenzenden Teilen und erfüllt zum anderen eine spaltübergreifende Abdichtfunktion.

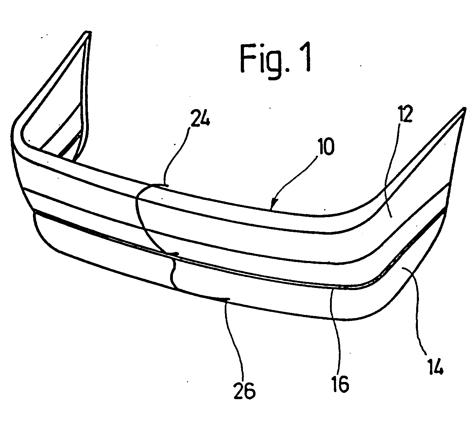

Im folgenden wird die Erfindung anhand der in der Zeichnung in schematischer Weise dargestellten Ausführungsbeispiele näher erläutert. Es zeigen
- Fig. 1: eine Ansicht eines als Verbundteil ausgebildeten Stoßfängers in schaubildlicher Darstellung;
- Fig. 2: a und b einen Ausschnitt aus einem Formwerkzeug mit Trenndichtung zur Herstellung des Formteils nach Fig. 1 in zwei verschiedenen Betriebszuständen;
- Fig. 3: a und b einen Ausschnitt aus einem Formwerkzeug mit konturbildendem Trennschieber zur Herstellung des Formteils nach Fig. 1 in zwei verschiedenen Betriebszuständen;
Bei dem in Fig. 1 gezeigten Formteil 10 handelt es sich um einen Stoßfänger für Kraftfahrzeuge, der im oberen Teil 12 aus einem hart eingestellten Kunststoff und in seinem unteren bodennahen Teil 14 aus einem weich eingestellten Kunststoff besteht. Die beiden vorzugsweise aus Polyurethan bestehenden Teile 12 und 14 sind an der Trennlinie 16 einstückig miteinander verbunden. Mit den Bezugszeichen 24,26 sind die zwei Angußstellen der Formteilbereiche 12,14 gekennzeichnet.

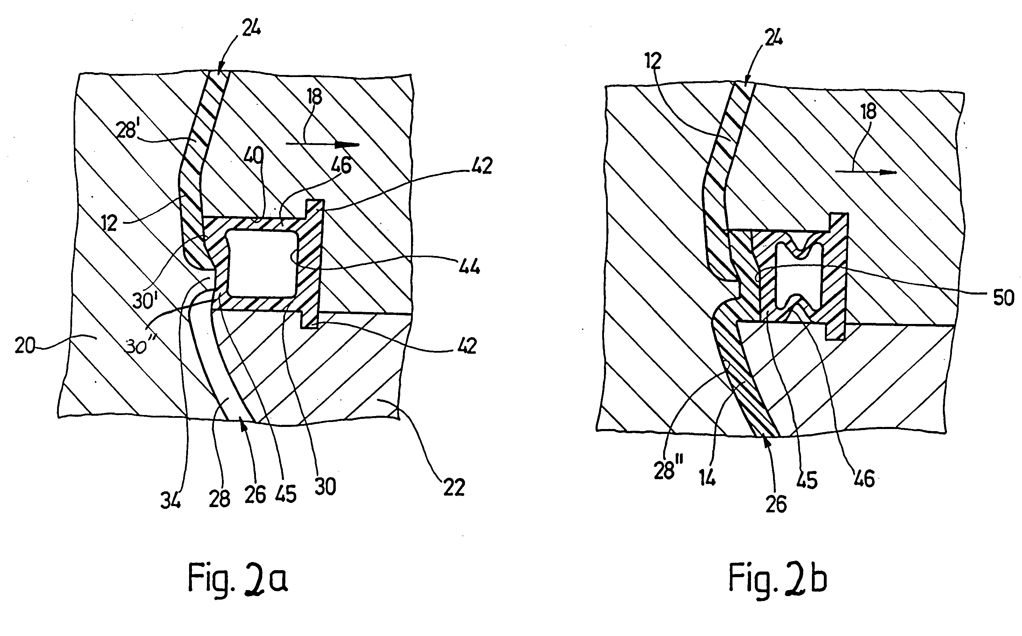

Das in Fig. 2a und b ausschnittsweise gezeigte Formwerkzeug zur Herstellung des Formteils 10 besteht im wesentlichen aus zwei in Richtung des Pfeils 18 gegeneinander verschiebbaren Werkzeugteilen 20,22, die ein Formnest 28 begrenzen, das über zwei verschiedene Angußstellen 24,26 mit je einem aus zwei Reaktionskomponenten, wie Polyetherpolyol und Polyisocianat, bestehenden Reaktionsgemischen in flüssigem Zustand beaufschlagt wird.

Weiter ist eine als gummielastischer Schlauch ausgebildete Trenndichtung 30 vorgesehen, die in einer zum Formnest hin randoffenen Aussparung 40 des Werkzeugsteils 22 angeordnet ist. Im rückwärtigen Bereich weist der Dichtungsschlauch seitlich überstehende Schultern 42 auf, mit denen er in entsprechenden Hinterschneidungen der Aussparung 40 verschiebefest fixiert ist. Der Hohlraum 44 des Dichtungsschlauchs 30 ist mit einem Druckmedium, beispielsweise mit Druckluft oder Hydraulikflüssigkeit beaufschlagbar und dadurch an seiner freien Stirnfläche 45 über die faltenbalgartig geformten Seitenwände 46 im Hub verstellbar. In der in Fig. 2a gezeigten Schließstellung ist die Stirnwand 45 gegen eine Trennkante 34 des Werkzeugteils 20 gepreßt, so daß die Formnestbereiche 28' und 28'' voneinander getrennt sind. Wenn nun über die Angußstelle 24 Reaktiongsgemisch eingespritzt wird, füllt sich zunächst der Formnestbereich 28', dessen trennstellennaher Bereich auf der einen Seite durch einen Teil 30' der Stirnwand 45 begrenzt wird. Im Anschluß an diesen Schuß wird vorzugsweise nach Beginn der Startzeit des Reaktionsgemischs 12 der Innendruck der Trenndichtung 40 so vermindert, daß sich deren Stirnwand 45 unter Freigabe eines Durchtrittsspalts 50 von der in Fig. 2a in die in Fig. 2b gezeigte Stellung verschiebt. Wird nun die Angußstelle 26 mit Reaktionsgemisch 14 beaufschlagt, so füllt sich der Formnestbereich 28''. Weiter trifft im Trennbereich 34 das noch flüssige Reaktionsgemisch 14 auf das bereits reagierende Reaktionsgemisch 12 und verbindet sich mit diesem beim anschließenden gemeinsamen Aushärten.

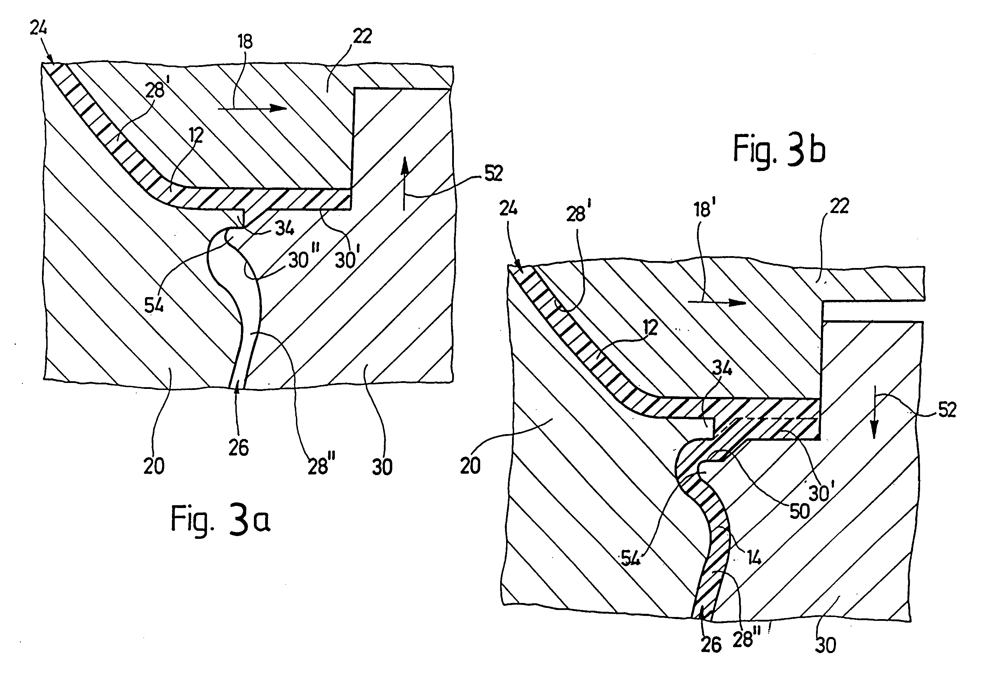

Bei dem in Fig. 3a und b gezeigten Ausführungsbeispiel ist in dem Werkzeugteil 22 ein konturenbildender Trennschieber 30 angeordnet der quer zur Werkzeugöffnungsrichtung 18 in Richtung des Pfeils 52 verschiebbar ist. Der Trennschieber 30 weist eine Trennkante 54 auf, die in der in Fig. 3a gezeigten Schließstellung gegen einen Trennsteg 34 des Werkzeugteils 20 anschlägt. Hierdurch werden die Formnestbereich 28' und 28'' voneinander getrennt, so daß beim Beaufschlagen der Angußstelle 24 sich zunächst nur der Formnestbereich 28' mit dem Reaktionsgemisch 12 füllt. Der Formnestbereich 28' ist in der Nähe der Trennstelle 24 durch eine relativ breite Begrenzungsfläche 56 des Trennschiebers 30 begrenzt. Wird nun der Trennschieber 30 von der Stellung nach Fig. 3a in Richtung des Pfeils 52 in die Stellung nach Fig. 3b verschoben, so öffnet sich zwischen den Trennkanten 34 und 54 ein Durchtrittsspalt 50, durch den beim anschließenden Füllen des Formnestbereichs 28'' Reaktionsgemisch in den durch die Begrenzungsfläche 30' berandeten Überlappungsbereich zwischen den beiden Formnestbereichen gelangt. Der Formnestbereich 28'' nimmt erst nach dem Verschieben des formgebenden Trennschiebers 30 im Bereich der Begrenzungsfläche 30'' seine endgültige Gestalt an. Nach dem Aushärten wird das Werkzeugteil 22 zusammen mit dem Trennschieber 30 in Richtung des Pfeils 18 vom Werkzeugteil 20 abgehoben. Das ausgehärtete Formteil 12,14 wird dadurch freigelegt und kann aus dem Werkzeug entnommen werden.

## Patentansprüche

1. Vorrichtung zur Herstellung von Kunststoff-Formteilen, in welcher mindestens zwei Reaktionskomponenten in flüssigem Zustand mischbar, in ein zusammenhängendes Formnest eines Formwerkzeuges einspritzbar und dort unter Bildung eines Formteils durch chemische Reaktion aushärtbar sind, wobei das Formnest (28) über mindestens zwei Angußstellen (24, 26) mit verschiedenen Reaktionsgemischen (12, 14) beaufschlagbar und an mindestens einer Trennstelle (34) zeitweilig in gegeneinander abgedichtete, mit je einer der Angußstellen verbundene Bereiche (28', 28'') unterteilt ist, und wobei in dem Formwerkzeug (20, 22) ein im Bereich der Trennstelle (34) relativ zum Formnest (28) verschiebbarer Trennschieber (30) angeordnet ist, **dadurch gekennzeichnet**, daß der Trennschieber (30) eine über die Trennstelle (34) nach den beiden benachbarten Formnestbereichen beidseitig überstehende und an den überstehenden Teilen (30', 30'') sowohl im Sperrzustand als auch im Öffnungszustand eine Begrenzungsfläche des Formnests in den benachbarten Formnestbereichen (28', 28'') bildende Sperrfläche aufweist, und daß der Trennschieber (30) quer zur Öffnungsrichtung (18) des Formwerkzeugs (20, 22) verschiebbar ist.

2. Vorrichtung nach Anspruch 1, **dadurch gekennzeichnet**, daß der Trennschieber (30) an seinen überstehenden Teilen (30', 30'') eine oberflächenvergrößernde Struktur aufweist.

3. Vorrichtung nach Anspruch 1 oder 2, **dadurch gekennzeichnet**, daß der Trennschieber (30) eine gegen eine in Öffnungsrichtung (18) des Formwerkzeugs (20, 22) ausgerichtete Trennkante (34) des gegenüberliegenden Werkzeugteils (20) dichtend anpreßbare Dichtkante (54) sowie im Anschluß an die Dichtkante (54) auf der einen Kantenseite eine im wesentlichen senkrecht zur Verschieberichtung (52) des Trennschiebers (30) ausgerichtete Begrenzungswand (30') und auf der anderen Kantenseite eine in der Offenstellung des Trennschiebers (30) eine die Innenkontur des Formteils (10) bildende Formnest-Begrenzungswand (30'') aufweist.

4. Vorrichtung zur Herstellung von Kunststoff-Formteilen, in welcher mindestens zwei Reaktionskomponenten in flüssigem Zustand mischbar, in ein zusammenhängendes Formnest eines Formwerkzeuges einspritzbar und dort unter Bildung eines Formteils durch chemische Reaktion aushärtbar sind, wobei das Formnest (28) über mindestens zwei Angußstellen (24, 26) mit verschiedenen Reaktionsgemischen (12, 14) beaufschlagbar und an mindestens einer Trennstelle (34) zeitweilig in gegeneinander abgedichtete, mit je einer der Angußstellen verbundene Bereiche (28', 28'') unterteilt ist, und wobei in dem Formwerkzeug (20, 22) eine im Bereich der Trennstelle (34) relativ zum Formnest (28) verschiebbare Trennvorrichtung (30) angeordnet ist, **dadurch gekennzeichnet**, daß die Trennvorrichtung als eine unter der Einwirkung eines Druckmediums verschiebbare flexible Trenndichtung (30) ausgebildet ist, die eine über die Trennstelle (34) nach den beiden benachbarten Formnestbereichen beidseitig überstehende und an den überstehenden Teilen (30', 30'') sowohl im Sperrzustand als auch im Öffnungszustand eine Begrenzungsfläche des Formnests in den benachbarten Formnestbereichen (28', 28'') bildende Sperrfläche aufweist.

5. Vorrichtung nach Anspruch 4, **dadurch gekennzeichnet**, daß die Trenndichtung (30) senkrecht zum Formnest (28) verschiebbar ist.

6. Vorrichtung nach Anspruch 4 oder 5, **dadurch gekennzeichnet**, daß die flexible Trenndichtung (30) als in einer langgestreckten randoffenen Aussparung (40) angeordneter, mit Druckluft oder Hydraulikflüssigkeit beaufschlagbarer Schlauch aus gummielastischem Material ausgebildet ist, der an seiner der Randöffnung der Aussparung (40) gegenüberliegenden Seite am Formwerkzeug (22) befestigt und mit seiner der Randöffnung zugewandten Stirnfläche (45) gegen eine am gegenüberliegenden Werkzeugteil angeordnete Trennkante (34) unter Trennung zweier Formnestbereiche (28', 28'') anpreßbar und von dieser unter Freigabe eines Durchtrittsspalts (50) zwischen den Formnestbereichen (28', 28'') abhebbar ist.

7. Vorrichtung nach Anspruch 6, **dadurch gekennzeichnet**, daß der Schlauch der Trenndichtung (30) in der randoffenen Aussparung (40) faltenbalgartig ausdehnbar- oder komprimierbar ist.

8. Vorrichtung nach Anspruch 6 oder 7, **dadurch gekennzeichnet**, daß die Weite des Durchtrittsspalts (50) durch die Wahl des Schlauchinnendrucks einstellbar ist.

9. Vorrichtung nach einem der Ansprüche 1 bis 8, **dadurch gekennzeichnet**, daß in einen der Formnestbereiche ein Folienzuschnitt oder ein Stoffzuschnitt einlegbar und von dem Reaktionsgemisch hinterschäumbar ist.

10. Vorrichtung nach Anspruch 9, **dadurch gekennzeichnet**, daß der Folien- oder Stoffzuschnitt an der Trennkante zwischen zwei Formnestbereichen durch den überstehenden Trennschieber oder die Trenndichtung zeitweilig einspannbar ist.

11. Vorrichtung nach Anspruch 10, **dadurch gekennzeichnet**, daß der Rand des Folien- oder Stoffzuschnitts über die Trennkante hinweg in den benachbarten Formnestbereich übersteht und dort von dem betreffenden Reaktionsgemisch umschäumbar ist.

12. Vorrichtung nach einem der Ansprüche 1 bis 11, **gekennzeichnet durch** eine nach Maßgabe der untschiedlichen Schuß-, Start- und Aushärtzeiten der Reaktionsgemische (12, 14) einstellbare Zeitfolgesteuerung zur Beaufschlagung der verschienden Angußstellen (24, 26) mit den Reaktionsgemischen (12, 14) und zur Ansteuerung des Trennschiebers (30) oder der Trenndichtung (30).

## Claims

1. A device for the manufacture of plastic moldings, in which at least two reaction components can be mixed in a liquid state, can be injected into a connected cavity of a mold and can there be hardened through a chemical reaction forming a molding, with the cavity (28) being able to be loaded with different reaction mixtures (12, 14) through at least two sprues (24, 26) and being divided at at least one separation plane (34) at times into mutually sealed regions (28', 28'') connected each to one of the sprues, and with a separating slide member (30) movable relative to the cavity (28) in the region of the separation plane (34) being arranged in the mold (20, 22), characterized in that the separating slide member (30) has a blocking surface projecting on both sides over the separation plane (34) toward the two adjacent cavity regions and forming at the projecting parts (30', 30'') both in the blocking state and also in the opening state a boundary surface of the cavity in the adjacent cavity regions (28', 28''), and that the separating slide member (30) is movable transversely with respect to the opening direction (18) of the mold (20, 22).

2. The device according to Claim 1, characterized in that the separating slide member (30) has at its projecting parts (30', 30'') a surface-enlarging structure.

3. The device according to Claim 1 or 2, characterized in that the separating slide member (30) has a sealing edge (54), which can be sealingly pressed against a separating edge (34) of the oppositely lying mold (20), which separating edge (34) is aligned in opening direction (18) of the mold (20, 22), and has following the sealing edge (54) on the one side a boundary wall (30') aligned substantially perpendicularly with respect to the direction (52) of movement of the separating slide member (30), and has on the other side a cavity boundary wall (30'') forming the inside contour of the molding (10) in the opening position of the separating slide member (30).

4. The device for the manufacture of plastic moldings, in which at least two reaction components can be mixed in a liquid state, can be injected into a connected cavity of a mold and can there be hardened through a chemical reaction forming a molding, with the cavity (28) being loadable with different reaction mixtures (12, 14) through at least two sprues (24, 26) and being divided at at least one separation plane (34) at times into mutually sealed regions (28', 28'') connected each to one of the sprues, and with a separating device (30) being arranged in the mold (20, 22), which separating device is movable relative to the cavity (28) in the region of the separation plane (34), characterized in that the separating device is constructed as a flexible separating seal (30) movable under the influence of a pressure medium, which separating seal has a blocking surface projecting on both sides over the separation plane (34) toward the two adjacent cavity regions and forming at the projecting parts (30', 30'') both in the blocking state and also in the opening state a boundary surface of the cavity in the adjacent cavity regions (28', 28'').

5. The device according to Claim 4, characterized in that the separating seal (30) is movable perpendicularly with respect to the cavity (28).

6. The device according to Claim 4 or 5, characterized in that the flexible separating seal (30) is constructed as a tube of an elastic rubber material, which tube is arranged in an elongated open border recess (40) and can be loaded with pressurized air or hydraulic fluid, and which tube with its side opposite the open border of the recess (40) is fastened to the mold (22) and can with its end face (45) facing the open border be pressed against a separating edge (34) arranged on the oppositely lying mold part separating two cavity regions (28', 28'') and can be lifted off from same opening a gap (50) between the cavity regions (28, 28'').

7. The device according to Claim 6, characterized in that the tube of the separating seal (30) can be, bellows-like, expanded or compressed in the open-border recess (40).

8. The device according to Claim 6 or 7, characterized in that the width of the gap (50) can be adjusted by selecting the internal pressure of the tube.

9. The device according to one of the Claims 1 to 8, characterized in that a foil blank or a fabric blank can be placed into one of the cavity regions and the reaction mixture can foam behind said blank.

10. The device according to Claim 9, characterized in that the foil or fabric blank can be clamped temporarily at the separation plane between two cavity regions by the projecting separating slide member or the separating seal.

11. The device according to Claim 10, characterized in that the edge of the foil or fabric blank projects over the separation plane into the adjacent cavity region and the respective reaction mixture foams there around the edge.

12. The device according to one of the Claims 1 to 11, characterized by a time-sequence control for loading the different sprues (24, 26) with the reaction mixtures (12, 14) and for controlling the separating slide member (30) or the separating seal (30), which time-sequence control can be adjusted in accordance with the varying injection, unstick and hardening times of the reaction mixture (12, 14).

## Revendications

1. Dispositif de fabrication de pièces moulées en matière plastique dans lequel au moins deux constituants réactionnels peuvent être mélangés à l'état liquide, injectés dans une cavité continue d'un moule où ils durcissent par réaction chimique avec formation d'une pièce moulée, la cavité de moule (28) pouvant être alimentée par l'intermédiaire d'au moins deux canaux de carotte (24, 26) avec des mélanges réactionnels (12, 14) différents et étant temporairement divisée à au moins un endroit de séparation (34) en deux zones (28', 28'') étanches l'une par rapport à l'autre et raccordées à respectivement un canal de carotte, et dans le moule (20, 22) étant disposée une coulisse de séparation (30) qui peut être déplacée dans la région de l'endroit de la séparation (34) par rapport à la cavité de moule (28), **caractérisé en ce** que la coulisse de séparation ((30) présente une surface d'arrêt qui dépasse de part et d'autre de la séparation (34) vers les deux zones de cavité de moule voisines et forme sur les deux éléments en saillie (30', 30'') une surface de délimitation de la cavité de moule dans les zones de cavité de moule (28', 28'') voisines, et ce à l'état de serrage aussi bien qu'à l'état d'ouverture, et que la coulisse de séparation (30) est déplaçable transversalement à la direction d'ouverture (18) du moule (20, 22).

2. Dispositif selon la revendication 1, caractérisé en ce que la coulisse de séparation (30) présente sur ses éléments en saillie (30', 30'') une structure qui augmente la surface.

3. Dispositif selon l'une des revendications 1 ou 2, caractérisé en ce que la coulisse de séparation (30) présente une arête d'étanchement (54) qui peut être appliquée de manière étanche contre une arête de séparation (34) de l'élément de moule opposé (20) orientée dans la direction d'ouverture (18) du moule (20, 22) et, en aval de l'arête d'étanchement (54), sur l'un des côtés de l'arête, une paroi de délimitation (30') sensiblement orientée perpendiculairement à la direction de déplacement (52) de la coulisse de séparation (30) et sur l'autre côté de l'arête, une paroi de délimitation (30'') de la cavité de moule qui, dans la position d'ouverture de la coulisse de séparation (30), forme le contour intérieur de la pièce moulée (10).

4. Dispositif de fabrication de pièces moulées en matière plastique dans lequel au moins deux constituants réactionnels peuvent être mélangés à l'état liquide, injectés dans une cavité continue d'un moule où ils durcissent par réaction chimique avec formation d'une pièce moulée, la cavité de moule (28) pouvant être alimentée par l'intermédiaire d'au moins deux canaux de carotte (24, 26) avec différents mélanges réactionnels (12, 14) et étant temporairement divisée à au moins un endroit de séparation (34) en deux zones (28', 28'') étanches l'une par rapport à l'autre et raccordées à respectivement un canal de carotte, et dans le moule (20, 22) étant disposée un dispositif de séparation (30) qui peut être déplacé dans la région de la séparation (34) par rapport à la cavité de moule (28), caractérisé en ce que le dispositif de séparation est réalisé sous la forme d'un joint d'étanchéité de séparation (30) flexible et déplaçable sous l'action d'un fluide sous pression, lequel présente une surface d'arrêt qui dépasse de part et d'autre de la séparation (34) vers les deux zones de cavité de moule voisines et forme sur les éléments en saillie (30' 30'') une surface de délimitation de la cavité de moule dans les zones de cavité (28', 28'') voisines, et ce à l'état de serrage aussi bien qu'à l'état d'ouverture.

5. Dispositif selon la revendication 4, caractérisé en ce que le joint d'étanchéité de séparation (30) peut être déplacé perpendiculairement par rapport à la cavité de moule (28).

6. Dispositif selon l'une des revendications 4 ou 5, caractérisé en ce que le joint d'étanchéité de séparation (30) flexible est réalisé sous la forme d'un tuyau flexible caoutchouteux disposé dans un évidement (40) allongé ouvert au bord et pouvant être alimenté avec de l'air comprimé ou avec un fluide hydraulique, qui est fixé sur le moule (22) sur le côté de l'évidement (40) opposé au bord ouvert, peut être appliqué avec sa face frontale (45) située du côté ouverture contre une arête de séparation (34) sur l'élément opposé du moule, avec séparation de deux zones de cavité de moule (28', 28'') et retiré de celle-ci avec libération d'une fente de passage (50) entre les zones de cavité de moule (28', 28'').

7. Dispositif selon la revendication 6, caractérisé en ce que le tuyau du joint d'étanchéité de séparation (30) est extensible ou compressible dans l'évidement (40) au bord ouvert à la manière d'un soufflet.

8. Dispositif selon l'une des revendications 6 ou 7, caractérisé en ce que la largeur de la fente de passage (50) peut être réglée par la pression intérieure du tuyau flexible.

9. Dispositif selon l'une des revendications 1 à 8, caractérisé en ce qu'une découpe de feuille ou une découpe de tissu peut être placée dans l'une des zones de cavité de moule et doublée de mousse sur la face arrière par le mélange réactionnel.

10. Dispositif selon la revendication 9, caractérisé en ce que la découpe de feuille ou de tissu peut être enserrée temporairement sur l'arête de séparation entre deux zones de cavité de moule par la coulisse de séparation en saillie ou par le joint d'étanchéité de séparation.

11. Dispositif selon la revendication 10, caractérisé en ce que le bord de la découpe de feuille ou de tissu dépasse au-delà de l'arête de séparation dans la zone de cavité de moule voisine où il peut être noyé dans la mousse du mélange réactionnel correspondant.

12. Dispositif selon l'une des revendications 1 à 11, caractérisé par une commande séquentielle pour l'alimentation des différents canaux de carotte (24, 26) avec les mélanges réactionnels (12, 14), qui est réglable en fonction des différents temps d'injection, d'amorçage et de durcissement des mélanges réactionnels (12, 14), et pour la commande de la coulisse de séparation (30) ou du joint d'étanchéité de séparation (30).
